# EUROPEAN PATENT APPLICATION

(11) **EP 3 809 547 A1**
(43) Date of publication of application: **21.04.2021**
(21) Application number: 20201695.2
(22) Date of filing: 14.10.2020
(51) Int. Cl.: H02G 3/32, F16L 3/22

(54) **CABLE HOLDER FOR FIXING AT LEAST TWO CABLES TO EACH OTHER**

(30) Priority: 17.10.2019 DE 102019216046
(71) Applicant: HellermannTyton GmbH, 25436 Tornesch (DE)
(72) Inventor: Krohn, Marion, 25421 Pinneberg (DE)
(74) Representative: Pfenning, Meinig & Partner mbB

(57) **Abstract**

The present disclosure relates to a cable holder (1) for fixing at least two cables (2a, 2b, 2c) to each other, comprising a first end section of the cable holder (1) forming a first clip (3a) for holding a cable (2a, 2b, 2c); a second end section of the cable holder (1) forming a second clip (4a) for holding a cable (2a, 2b, 2c); and a middle section of the cable holder (1) linking the two end sections (3, 4); wherein the cable holder (1) is configured to hold the cables (2a, 2b, 2c) in parallel; and wherein the first clip (3a) and the second clip (4a) are offset relative to one another in an axial direction (z) of the cables (2a, 2b, 2c) so as to provide a cable holder (1) overcoming known disadvantages of the state of the art.

## Description

### Field of the Invention

The invention relates to a cable holder for fixing at least two cables to each other in parallel.

### Background

In many technical applications, two or more cables including electric cables, Bowden cables, tubes, pipes and the like need to be fixed in a parallel direction. Commonly, this is achieved for instance by a cable tie with a standard or double head or an endless cable tie with a separate head and spacer. However, for cable ties, a respective tool is needed to cut the cable tie at the required length. One result of the cutting is a sharp edge. This is problematic in areas where people may access the cable holder and thus can be hurt by the sharp edge. Also, when used in a visible area, a more inconspicuous appearance and a more efficient use of space is desirable.

Another possibility relates to clips which are commonly referred to as "open Omega clips" as they are shaped like an open Omega in a cross section perpendicular to an axial direction of the cables to be fixed. These clips are configured to circumferentially grip around the respective cable to be held and feature a slit through which the respective cable can be clipped into the clip, i.e. into a channel of the clip, in order to be held by the clip, in the channel of the clip. The slit is smaller than the diameter of the cable to be held. As the clips are elastic, usually are made from plastic, the clip is deformed when the cable is pressed into the slit such that the slit widens and the cable can glide into its intended position, said channel, inside the clip. As the inner diameter of the channel is adapted to the cross section of the cable, that is, it is wider than the slit, the clip then, due to its elasticity, regains its original shape. Therein, in order to foster clipping the cables into the clips, the surfaces of the clips in the slits may diverge with increasing distance from the inside of the clip, for instance a centre of said channel, such that they provide a guidance for the cable to be clipped into the clip. However, when cables are fixed by these "open Omega clips", the risk of unintended loosening is quite high because the disassemble force is rather low. The push-in and pull-out forces depend strongly on the diameter of the cable and only a small tolerance range is possible.

Another possibility to fix cables to each other and usually at some additional element of an infrastructure is a cable retainer with a lid. Such cable retainers usually comprise a housing, which may be attached to the infrastructure element, which comprises several clips for fixing cables in parallel direction as well as a lid with an additional locking mechanism where the lid prevents the cables from being pulled out of the clips. Such cable retainers with lid are disclosed for instance in US 5,363,593 A, WO 2007/13953 A1, and DE 3708864 C2. As described in US 5,626,316 A, the lid itself may also comprise a clip for one or more additional cables. Cables may be held in parallel also by cable holders with individual lids for each cable such as disclosed in EP 2165041 A2. However, cable retainers with a lid are usually rather big because the additional locking feature is stacked up high and often the fastener disturbs the intended inconspicuous appearance.

The objective technical problem to be solved is how to provide a cable holder that overcomes the known disadvantages of the state of the art.

### SUMMARY

This problem is solved by the subject matter of the independent claim. Advantageous embodiments are apparent from the dependent claims, the figures and the description.

One aspect relates to a cable holder for fixing at least two cables to each other. The cables may comprise electric cables, Bowden cables, tube, pipes and the like, i.e. any type of cylindrical element. In particular, the cables may have a diameter of less than 15mm, preferably a diameter of 2-10mm or, even more preferably, 3-8mm. In particular, the cable holder may be configured for fixing the at least two cables only to each other. So, it preferably does not comprise additional means for fixing the cable holder to an element different from the cables to be fixed to each other such as an infrastructure element like a wall.

The cable holder comprises a first end section forming a first clip for holding a cable, a second end section forming a second clip for holding a cable and a middle section linking the two end sections. The sections may be defined along an extension of the cable holder from one opposite end point to another. The extension may be measured or defined in a projection of the cable holder on a plane which is perpendicular to the below-mentioned axial direction of the cables or channels. So, the extension may be measured or defined along a curved line lying within the body of the cable holder. The extension relevant for defining the different sections may be the maximal extension where, for instance, the first and second end section may each cover less than or exactly 50% of the overall extension, in particular less than or exactly 33% or less than or exactly 25% of the extension. Correspondingly, the middle section may cover the rest of the overall extension, e.g. 0,1% if the end sections each cover 49,95% of the overall extension or 33% if the end sections each cover 33% of the overall extension or 50% if the end sections each cover 25%% of the overall extension The first clip and second clip may be configured for holding the same cable or different cables, as explained in more detail below.

The cable holder is configured to hold the cables in parallel. Therefore, the clips also are orientated in parallel which means that an axial direction of respective channels of the clips may be orientated in parallel. When a clip is in use, the respective cable is located in the channel of the clip the cable is clipped into and held by. Therefore, the axial direction of the channels is equivalent to a longitudinal direction of the cables in the clip, i.e. an axial direction of the cables. In particular, the first end section of the cable holder may be forming only in the first clip, meaning that in this case, the first clip is the one and only clip in the first end section.

The first and second clips are offset relative to one another in an axial direction of the cables, i.e. the axial direction of the channels configured to hold the cables when the cable holder is used. As the reference to the direction of the cable to be held is more concrete, and thus concise than the reference to the direction of the channel where the cable is arranged inside the clip when held, it may be referred to the direction of the cables in the following for the sake of conciseness, although the cables themselves, as being standardized parts, are not claimed by this application. In particular, the first and second clips may be offset relative to one another in the axial direction such that in any plane parallel to the axial direction, orthogonal projections of the first clip and second clip do not, or only to a marginal extent, overlap. A marginal extent or amount may be, for instance, less than five percent, less than three per cent or less than one percent of the length of the first and/or second clips in the axial direction. Preferably, the first clip and second clip are offset relative to one another in the axial direction such that there is a plane parallel to the axial direction in which the orthogonal projection of the first clip on the plane and the orthogonal projection of the second clip on the plane are adjoining or almost adjoining. Almost adjoining may refer to the case where a gap between the respective projections is only of marginal extent with reference to at least one of the two clips involved.

This gives the advantage that the first clip and the second clip may be clipped onto the same cable, either by deforming the middle section of the cable holder or by using a chain of several cable holders where the first clip of one cable holder is clipped onto the same cable as the second clip of another cable holder. It has to be noted that, as a cable may form a loop and thus be clipped into different clips of the same cable holder in both adjoining sections of the cable and separate sections of the cable, here and in the following, when referring to "the same cable", it is referred to adjoining sections of one cable if not specified differently.

In an advantageous embodiment, the second end section also forms a third clip for holding a cable, that is, for holding non-adjoining sections of the same cable as the second clip, where the third clip is offset relative to the first clip and relative to the second clip in the axial direction of the cables (or channels of the clips), and in an orthogonal projection of the first, second, and third clips on a plane parallel to the axial direction, the first clip is arranged in between the second clip and the third clip. Herein, the second end section may form only the second and third clips for holding the cable, i.e., the second and third clips may be the only clips in the second end section. The three clips are thus configured to hold adjoining sections of the same cable, either all three clips being formed by the same cable holder or the first clip being formed by one cable holder and the second and third clips being formed by another cable holder.

In an orthogonal projection of the second and the third clips on a plane perpendicular to the axial direction, the second clip and the third clip may overlap, be it completely or almost completely. Almost completely can describe the situation where the overlap of the second clip and the third clip is more than a given percentage of the area covered by the projection, for instance more than 90% or more than 95%. In said projection, i.e. the plane perpendicular to the axial direction, the second clip and the third clip may also have an identical shape. This may also be true for the first, second and third clips. However, a slit through which a cable is clipped into the channel of the first clip may be orientated differently than the slits through which a cable is clipped into the channels of the second and third clips. The slits of the second and third clips may be orientated identically.

This gives the advantage that the clips are secured against a shift relative to each other in the axial direction. Thus, the stability of a chain with more than one of the described cable holders is significantly more stable. Also, the stability is increased for the first and second end sections of one and the same cable holder gearing into each other.

According to another advantageous embodiment, the middle section of the cable holder forms at least one additional clip for holding a cable, in particular two, preferably only two additional clips for holding respective cables. Therein, preferably, the clips formed by the first and second end sections are configured for holding the same cable, that is, adjoining sections of one cable. Therein, the cable holder may be formed such that, when the clips formed by the first and second end sections are not holding the same cable, its shape is different from the cable holder when the clips formed by the first and second end section are holding the same cable, i.e. when a cable is clipped into both the clip(s) formed by the first and the clip(s) formed by the second end section. In other words, the cable holder is shaped such that is has to be deformed in a plane perpendicular to the axial direction of the cables and channels when the clips formed by the first and second end sections are clipped onto adjoining sections of one cable.

This gives the advantage that tension is achieved in the cable holder when it is holding the cables which realizes a permanent tolerance compensation and a slip control, meaning the cable holder remains in the initial position on the cables where it has been clipped onto the cables. All this, nota bene, without any additional locking element and minimal demand of space. So, an important insight underlying the proposed cable holder is that the clips themselves may be configured as locking elements. Also, the cable holder can be closed and reopened without a tool and its appearance is very inconspicuous.

The length of the at least one additional clip in the axial direction of the cables and/or the length of the channel in the at least one additional clip in the axial direction of the channel may essentially equal the sum of the lengths of the first and second clips or the sum of lengths of the first, second and third clips, corresponding to the sum of the lengths of the channels of the first and second clips or the sum of the lengths of the channels of the first, second and third clips. For instance, the first clip may have 40% ± 10% of the length of the additional clip or its channel and the second and third clips, each 30% ± 5% of the length of the additional clip or its channel. Note that also in general, the length of the first clip may be larger than the lengths of the second and third clips in the axial direction.

This gives the advantage that, when the first, second and third clips are holding the same cable, they do not consume more axial space than the one or more additional clips at the neighbouring cables said cable is fixed or attached to by the cable holder. This increases the flexibility of use for the cable holder, its easiness to clean, and its inconspicuous appearance.

In yet another advantageous embodiment, at least two of the clips are linked to each other by respective film hinges. So, in particular, the first clip and one additional clip and/or second clip and one additional clip and/or third clip and one additional clip and/or one additional clip and another additional clip and/or first clip and the second clip are linked to each other by respective film hinges. So, all clips may be linked to at least one adjoining clip by a respective film hinge, that is, all clips connected to each other are connected to each other by respective film hinges. Correspondingly, this embodiment may, in addition or alternatively, refer to at least two of the sections linked to each other by respective film hinges. So, in particular, the first end section and the middle section and/or second end section and the middle section may be linked to each other by respective film hinges. The middle sections may comprise one or more film hinges linking two or more additional clips. In the area of the film hinges, e.g. in an area along the axial direction, a thickness of the cable holder may be reduced so as to foster folding and/or bending the cable holder in that area perpendicular to the axial direction.

This gives the advantage that it is easier to (re)close and reopen the cable holder and also the amount of deformation of the cable holder when attaching it to the cables may be increased without requiring more force, which leads to an improved tolerance compensation and, accordingly, flexibility of the cable holder.

In another advantageous embodiment, the clips are Omega clips. That is, they are configured to grip around the respective (section of the) cable to be held with the flanks of a channel in which the cable is to be held when the cable holder is in use, and feature a slit running parallel to the channel through which the cable can be inserted or clipped into the clip, i.e. into the channel of the clip, in order to be held by the clip. This allows assembling without a tool.

Assembling without a tool may also be facilitated by providing an additional mounting nose, a small grip, on the first clip and/or second clip and/or third clip, in particular not on the at least one additional clip. The mounting nose may provide a grip for a finger and/or an additional guiding surface for the cable to be clipped into the clip. The additional guiding surface may seamlessly merge into a slit surface, a surface of the clips which is located in the slits, of the respective clips.

The slits of one, more or all different clips, except the second and third clip, may be orientated towards each other. In particular, the slits of clip one and two, and/or clips one and three, and/or clips one and an additional clip, and/or clip three and an additional clip, and/or an additional clip and other additional clips may be orientated towards each other. The orientation of the slit may be determined by a straight line, perpendicular to the axial direction, extending from the centre of the channel in a plane perpendicular to the axial direction, which is identical to the centre of the cable that is held in the channel in a plane perpendicular to the axial direction, through the slit, preferably the centre of the slit. Slits may be considered as being orientated towards each other if said straight line of one clip crosses the corresponding straight line of another clip.

This gives the advantage of enhanced stability and enhanced reliability against unintended disassembly.

Therein, preferably for each clip, at least one surface of the clips which is located in the slits, i.e. a guiding surface for the cable to be clipped into the clip which may be referred to as a slit surface, seamlessly and/or smoothly merges into the corresponding surface of the neighbouring clip in the slit directly or via a connecting surface or via the film hinge linking the two respective clips. Correspondingly, neighbouring clips are connected with each other or with a corresponding intermediate surface or said film hinge at an outermost end of the flange of the channel of the respective clip.

This gives the advantage that the levers are optimized for reliably locking the cable holder, increasing stability and reducing problems of loose ends such as unintended disassembling or injury. Furthermore, it results in an inconspicuous appearance.

In a further advantageous embodiment, the cable holder is formed integrally in one piece that is, made in one single piece. In particular, the cable holder may be moulded integrally. The cable holder may be made from plastic. Alternatively, the cable holder may also be made from spring steel.

This gives the advantage of a flexible cable holder that can be deformed repeatedly, that is, closed and reopened and reclosed repeatedly without changing characteristics, that is, with continued tolerance compensation and reliable fixation at a given position on the cables.

In yet another advantageous embodiment, the clips formed by the first and the second end section are the only locking elements of the cable holder. Here, the locking element may be considered an element that that interacts with one or more other elements in order to ensure that the cables mounted by the clips remain in the clips, i.e. an element configured to increase the disassemble force. Here, the clips formed by the first and the second end sections may, in their function as locking elements, interact with the cable and the respective other clip or clips to hold the cable holder in a deformed shape, locking the cables in the channels of the respective clips.

This saves a lot of space and leads to an inconspicuous appearance which is a frequent requirement for using cable holders in visible areas.

Another aspect relates to a cable-holding system for fixing a number of cables, in particular n cables, to each other with a number of cable holders, in particular n cable holders, according to any of the described embodiments. Therein, n may be a natural number >1. Preferably, the cable-holding system is configured to hold the first cable with the clip of the first end section of the first cable holder and the at least one clip of the second end section of the n-th cable holder and to hold the i-th cable with the clip of the first end section of the i-th cable holder and the at least one clip of the second end section of the i-1th cable holder with i being a natural number and 1<i≤n. Preferably, the middle section does not form any additional clip for holding a cable in the cable holders of this cable-holding system.

This gives the advantage that a virtually arbitrary number of cables can be attached to each other with a corresponding number of identically shaped cable holders. There, the cable holders form the cable-holding system by forming a chain of cable holders.

Therein, it is particularly advantageous if the clips are configured such that, in proper use, that is, when the cables are mounted on the clips, the slits of the clips holding the same cable are orientated differently, in particular away from each other. In particular, the slits of the clip (as formed by the first end section) and the slits of the clip (as formed by the second end section) are orientated away from each other. This gives the advantage that, due to the different orientation of the slits, each slit is locked by the flank of a channel of a clip with differently orientated slits.

The features and combinations of features described above as well as the features and combinations or features disclosed in the figure description or the figures alone may not only be used alone or in the described combination but also with other features or without some of the disclosed features without leaving the scope of the invention. Consequently, embodiments that are not explicitly shown and described by the figures but that can be generated by separately combining the individual features disclosed in the figures are also part of the invention. Therefore, embodiments and combinations of features that do not comprise all features of an originally formulated independent claim are to be regarded as disclosed. Furthermore, embodiments and combinations of features that differ from or extend beyond the combinations of features described by the dependencies of the claims are to be regarded as disclosed.

### Brief Description of the Drawings

Exemplary embodiments are further described in the following by means of schematic drawings. Therein,
- Figure 1: shows a perspective view on an exemplary cable holder;
- Figures 2a-2d: illustrate the process of mounting cables on the cable holder; and
- Figures 3a-3c: show different perspective views on an exemplary number of three cables mounted on the cable holder of Figs. 1 and 2.

In the figures, identical or functionally identical elements have the same reference signs.

### Detailed Description

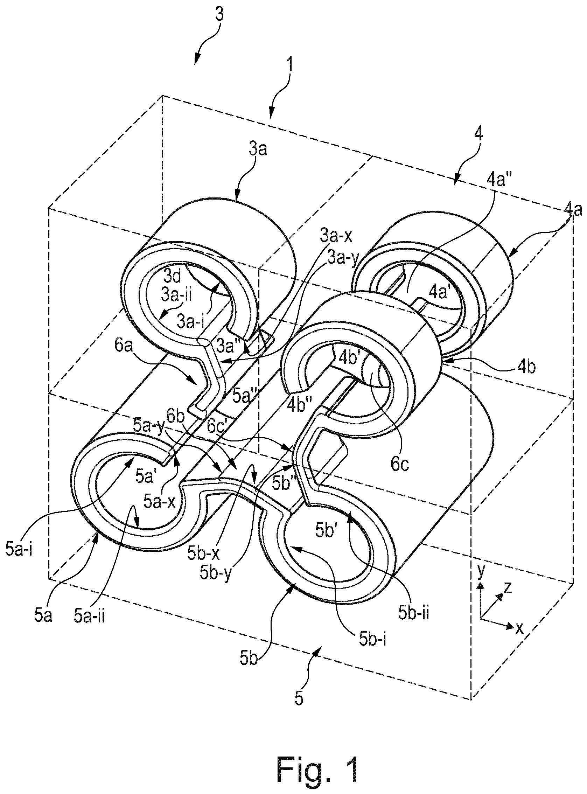

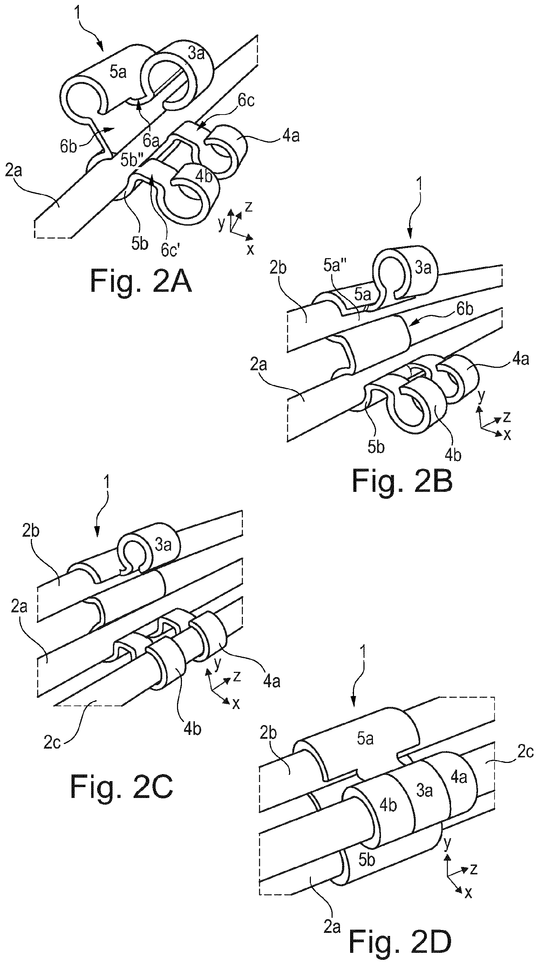

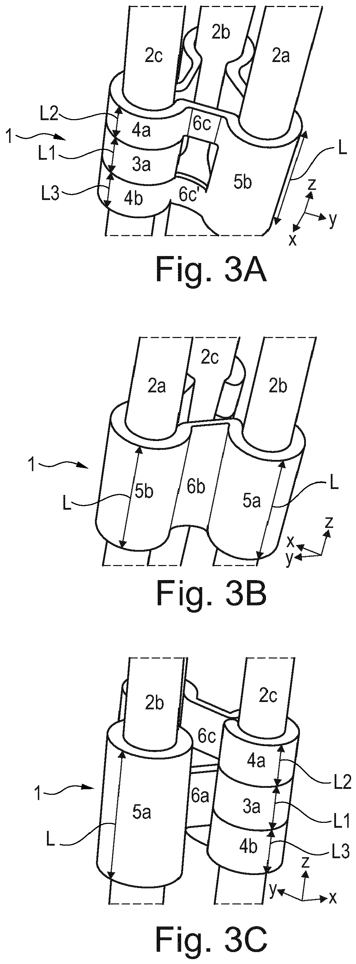

Figure 1 shows an exemplary embodiment of a cable holder 1 for fixing at least two cables to each other, in the present example three cables 2a, 2b, 2c (Figs. 2, 3). The cable holder 1 has a first end section, which is the part of the cable holder 1 in the rectangle 3, forming a first clip 3a for holding a cable 2c (Figs. 2, 3) and a second end section, which is the part of the cable holder 1 in the rectangle 4, for forming a second clip 4a and, in the present example, a third clip 4b for holding the cable 2c and a middle section, which is the part of the cable holder 1 in the rectangles 5, linking the two end sections. In the present example, the middle section forms at least one, here two additional clips 5a, 5b for holding a respective cable, in particular cables 2a, 2b. The cable holder 1 is configured to hold the cables 2a, 2b 2c in parallel, in the shown example parallel to the z-direction.

This is achieved, in the present example, with the clips 3a, 4a, 4b, 5a, 5b having respective channels 3a', 4a', 4b', 5a', 5b' that extend along the z-direction for holding the cables 2a, 2b, 2c. Along the z-direction, which is the axial direction of the channels 3a'-5b', and, accordingly, also the axial direction of the cables 2a, 2b, 2c, the clips 3a, 4a, 4b, 5a, 5b feature respective slits 3a", 4a", 4b", 5a", 5b" that extend along the respective channel 3a'-5b' and are configured to mount the respective cable 2a, 2b, 2c on the cable holder 1 by pressing them through the respective slits 3a"-5b".

To this end, the channels 3a'-5b', which, in the present example, have a round cross section in the xy-plane perpendicular to the axial direction, feature respective flanks 3a-i, 3a-ii that are moved away from each other when the respective cable 2a, 2b, 2c is pressed into the clip 3a-5b as the diameter of the channels 3a'-5b' (and cables 2a, 2b, 2c) is larger than the diameter of the slits 3a"-5b". Consequently, the cables are held in the respective clips 3a-5b by the restoring force of the flanks 3a-1, 3a-ii - 5b-I, 5b-ii even if the cable holder 1 is not locked as explained later when referring to Figs. 2 and 3.

In order to allow said locking, i.e. attaching the clips 3a, 4a, 4b of the first end section and the second end section to the same cable 2c (Figs. 2, 3), the first clip 3a and the second clip 4a as well as, in the present example, the third clip 4b, are offset relative to one another in the axial direction of the channels 3a'-5b' as well as of the cables 2a, 2b, 2c, that is, in the present example, in the z-direction. Consequently, the first clip 3a may be moved into the x-direction in between the second clip 4a and the third clip 4b so as to grip around the same cable 2c, as shown in Figs. 2 and 3.

In the present example, the different clips 3a, 4a, 4b, 5a, 5b are linked to each other by respective film hinges 6a, 6b, 6c, 6c'. In particular, each clip is linked to another clip which, when in use, holds a cable different from the cable held by the one clip by a respective film hinge. So, the first clip 3a is linked to an additional clip 5a by a film hinge 6a where the additional clip 5a is linked to another additional clip 5b by the film hinge 6b and the second and third clip 4a, 4b are linked to the other additional clip 5b by the film hinge 6c and 6c', respectively. The film hinges are configured to allow easy motion of the respective clips 3a-5b relative to each other in the xy-plane. Consequently, they allow bending the cable holder 1 parallel to the axial, that is, z-direction.

In the present example, at least one of the surfaces of the clips which delimit the slits 3a"-5b", i.e. one of the slit-surfaces 3a-x, 3a-y, 5a-x, 5a-y, 5b-x, 5b-y, merge into the surface of the neighbouring clip 3a-5b in the slits 3a"-5b", i.e. into a neighbouring slit-surface 3a-x, 3a-y, 5a-x, 5a-y, 5b-x, 5b-y, via the respective film hinges 6a-6c' linking the respective clips 3a-5b. For instance, the surface 3a-y seamlessly merges with the surface 5a-x via the film hinge 6a.

Correspondingly, the film hinges 6a-6c' are attached to the respective clips at end points of the flanks 3a-i, 3a-ii, ..5a-i, 5a-ii, 5b-I, 5b-ii. This results in leverage forces advantageous for an improved tolerance range for the cable diameters that can be held reliably by the cable holder 1. In the present example, slit-surfaces 3a-x, 3a-y, 5a-x, 5a-y, 5b-x, 5b-y and respective film hinges 6a-6c' form, in an orthogonal projection on a plane perpendicular to the axial direction, a convex surface.

In Fig. 2A, the cable holder 1 of Fig. 1 is shown with a first cable 2a clipped into, that is, mounted on the additional clip 5b. As apparent by comparing Fig. 2A with Fig. 1, inserting the cable 2a into the clip 5b spreads the cable holder 1 as the distance between the first clip 3a on the one hand side and the second and third clip 4a, 4b on the other side increases. Correspondingly, the slit 5b" of Fig. 2A is larger than the slit 5b" in Fig. 1. Similarly, in Fig. 2B where a second cable 2b is clipped into the additional clip 5a, slit 5a" is widened, further spreading the cable holder 1.

In Fig. 2C, the third cable 2c is clipped into the second and third clip 4a, 4b. Finally, in Fig. 2D, the third cable 2c is additionally clipped into the first clip 3a. Consequently, in the present example, the first clip 3a is arranged in between the second clip 4a and the third clip 4b in the axial direction of cable 2c, that is, the axial direction also of the respective channels 3a', 4a' and 4b' (Fig. 1). So, the clips 3a, 4a, 4b hold adjoining sections of the cable 2c and are arranged adjoining to each other in the axial direction during intended use.

Figs. 3A-3C show different views of the cable holder 1 from Fig. 2D. The at least one, here two, additional clips 5a, 5b have the length L in the axial direction. In this example, the length L essentially equals the sum, i.e. equals or differs only to a marginal amount from the sum, of the lengths L1 of the first clip 3a, the length L2 of the second clip 4a, and the length L3 of the third clip 3b.

As apparent from the distance between the first clip 3a on the one side and the second and third clips 4a, 4b on the other side in Fig. 2C as compared to the relative position of said clips in Fig. 2D, it is apparent that in Fig. 2D, the cable holder 1 is permanently under tension. Consequently, a permanent tolerance compensation is achieved and the clip holder 1 is mounted firmly on the cables 2a-2c, that is, it may not slip along the cables 2a-2c in the axial or z-direction. Furthermore, said tension prevents the cables 2a-2c from deliberately being disassembled. So, the clips 3a, 4a, 4b in the end portions do not only function as a clip for holding the respective cable 2c in position, but also as a locking means preventing the unintended disassembly of cables 2a, 2b, 2c and cable holder 1. Consequently, no additional locking means is required.

In summary, a cable holder 1 that can be assembled without a tool is provided whereby the cables 2a, 2b, 2c can be mounted by pushing them into the clips 3a-5b by hand. The last cable 2c is clipped in from two or more, in the present example three clips 3a, 4a, 4b from opposite directions. No additional locking feature is needed which reduces complexity and costs for the cable holder 1. In combination with the film hinges 6a-6c' between the clips 3a-5b, a relatively large tolerance range is possible. Because no additional locking feature is needed to be added, the cable holder 1 saves a lot of space and its appearance is very inconspicuous, which is a frequent requirement for using the cable holder 1 in visible areas. Furthermore, in particular as compared to cable ties, the proposed cable holder 1 can be closed and reopened non-destructively and hence be used repeatedly.

## Claims

1. Cable holder (1) for fixing at least two cables (2a, 2b, 2c) to each other, comprising
- a first end section of the cable holder (1) forming a first clip (3a) for holding a cable (2a, 2b, 2c);
- a second end section of the cable holder (1) forming a second clip (4a) for holding a cable (2a, 2b, 2c); and
- a middle section of the cable holder (1) linking the two end sections (3, 4);
where the cable holder (1) is configured to hold the cables (2a, 2b, 2c) in parallel;
**characterized in that**
the first clip (3a) and second clip (4a) are offset relative to one another in an axial direction (z) of the cables (2a, 2b, 2c).

2. Cable holder (1) according to claim 1,
**characterized in that**
the second end section also forms a third clip (4b) for holding a cable (2a, 2b, 2c), where the third clip (4b) is offset relative to the first clip (3a) and relative to the second clip (4a) in the axial direction (z) of the cables, and in an orthogonal projection of the first, second, and third clips (3a, 4a 4b) on a plane parallel to the axial direction (z), the first clip (3a) is arranged in between the second clip (4a) and the third clip (4b).

3. Cable holder (1) according to any of the preceding claims,
**characterized in that**
the middle section of the cable holder (1) forms at least one additional clip (5a, 5b) for holding a cable (2a, 2b, 2c), in particular two additional clips (5a, 5b) for holding respective cables (2a, 2b, 2c).

4. Cable holder (1) according to claim 3,
**characterized in that**
the length (L) of the at least one additional clip (5a, 5b) in the axial direction (z) of the cables (2a, 2b, 2c) essentially equals the sum of lengths (L1, L2) of first and second clip (3a, 4a) or the sum of lengths (L1, L2, L3) of first, second, and third clip (3a, 4a, 4b).

5. Cable holder (1) according to any of the preceding claims,
**characterized in that**
at least two of the clips (3a, 4a, 4b, 5a, 5b), in particular the first clip (3a) and one additional clip (5a, 5b) and/or second clip (4a) and one additional clip (5a, 5b) and/or third clip (4b) and one additional clip (5a, 5b) and/or one additional clip (5a, 5b) and another additional clip (5b, 5a), are linked to each other by respective film hinges (6a, 6b, 6c, 6c').

6. Cable holder (1) according to any of the preceding claims,
**characterized in that**
the clips (3a, 4a, 4b, 5a, 5b) are configured to grip around the respective cable (2a, 2b, 2c) to be held and feature a slit (3a", 4a", 4b", 5a", 5b") through which a cable (2a, 2b, 2c) can be clipped into the clip (3a, 4a, 4b, 5a, 5b) in order to be held by the clip (3a, 4a, 4b, 5a, 5b).

7. Cable holder (1) according to claim 6,
**characterized in that**
the slits (3a", 4a", 4b", 5a", 5b") of different clips (3a, 4a, 4b, 5a, 5b) are orientated towards each other.

8. Cable holder (1) according to claim 6 or 7,
**characterized in that**
at least one surface (3a-x, 3a-y - 5b-x, 5b-y) of the clips (3a, 4a, 4b, 5a, 5b) which is located in the slits (3a", 4a", 4b", 5a", 5b") merges into the surface (3a-x, 3a-y - 5b-x, 5b-y) of the neighboring clip (3a, 4a, 4b, 5a, 5b) in the slit (3a", 4a", 4b", 5a", 5b") directly or via a connecting surface or via the film hinge (6a, 6b, 6c, 6c')linking the two respective clips (3a, 4a, 4b, 5a, 5b).

9. Cable holder (1) according to any of the preceding claims,
**characterized in that**
the cable holder (1) is formed integrally in one piece.

10. Cable holder (1) according to any of the preceding claims,
**characterized in that**
the cable holder (1) is made from plastic.

11. Cable holder (1) according to any of the preceding claims,
**characterized in that**
the clips (3a, 4a, 4b) formed by the first and the second end section are the only locking elements of the cable holder (1).

12. Cable holder (1) according to any of the preceding claims, **characterized in that** the clips (3a, 4a, 4b) are Omega clips.

13. Cable holding system for fixing n cables (2c) to each other, with n cable holders (1) according to claim 1, 2, 5, 6, 7, 8, 9, 10, 11, where n >1, configured to hold the first cable (2c) with the clip (3a) of the first end section of the first cable holder (1) and the at least one clip (4a, 4b) of the second end section of the n-th cable holder (1), and to hold the i-th cable (2c) with the clip (3a) of the first end section of the i-th cable holder (1) and the at least one clip (4a, 4b) of the second end section of the (i-1)th cable holder (1), with 1<i≤n.

14. Cable holding system according to claim 13, where the clips (3a, 4a, 4b) are configured such that, in intended use, the slit (3a") of the clip (3a) formed by first end sections and the at least one slit (4a", 4b") of the at least one clip (4a, 4b) formed by second end sections holding the same cable (2c) are orientated differently, in particular away from each other.
